# EUROPÄISCHE PATENTANMELDUNG

(11) **EP 1 384 980 A1**
(43) Veröffentlichungstag der Anmeldung: **28.01.2004**
(21) Anmeldenummer: 02102061.5
(22) Anmeldetag: 25.07.2002
(51) Int. Cl.: G01L 1/22, G01B 7/16, G01G 3/14

(54) **Feuchtigkeitsschutz für einen elektromechanischen Wandler**

(71) Anmelder: Mettler-Toledo GmbH, 8606 Greifensee (CH)
(72) Erfinder: Ziebart, Volker, 8418, Schlatt (CH); Tellenbach, Jean-Maurice, 8442, Hettlingen (CH)

(57) **Zusammenfassung**

Für auf einen Verformungskörper (1) einer Kraftmesszelle aufgebrachte oder aufbringbare Dehmessstreifen (13, 13') wird eine Mehrlagenschicht (16) als Schutzschicht gegen eindringende Feuchtigkeit vorgeschlagen. Ein Dehnmessstreifen(13) weist eine dehnungsempfindliche, auf einem Träger (15) aufgebrachte elektrische Widerstandsbahn (14) und Anschlusselektroden (17) zur Kontaktierung der Widerstandsbahn (14) auf, wobei der Dehnmessstreifen (13, 13') mit einer mindestens einen Teil des Trägers (15) und/oder der Widerstandsbahn (14) und/oder der Anschlusselektroden (17) bedeckenden Mehrlagenschicht (16) als Schutzschicht gegen das Eindringen von Feuchtigkeit versehen ist. Die Mehrlagenschicht (16) setzt sich aus einer abwechselnden Folge von einer Polymerschicht (19) und einer Barriereschicht (20) zusammen und besteht aus mindestens drei dünnen Einzelschichten. Im Falle des Aufbringens einer Mehrlagenschicht (16) auf einen bereits am Verformungskörper einer Kraftmesszelle applizierten Dehnmessstreifen (13, 13') kann die Mehrlagenschicht (16) zusätzlich auch einen Teil des Verformungskörpers (1) bedecken.

## Beschreibung

Die Erfindung betrifft eine Kraftmesszelle mit einem Verformungskörper und mit mindestens einem auf dem Verformungskörper aufgebrachten Dehnmessstreifen, welcher eine dehnungsempfindliche auf einem Träger aufgebrachte elektrische Widerstandsbahn und Anschlusselektroden zur Kontaktierung der Widerstandsbahn aufweist, wobei der mindestens eine Dehnmessstreifen und gegebenenfalls mindestens ein Teil des Verformungskörpers mit einer Mehrlagenschicht versehen ist, sowie einen einzelnen Dehnmessstreifen oder eine Reihen- oder Flächenanordnung von Dehnmessstreifen, versehen mit einer dehnungsempfindlichen auf einem Träger aufgebrachten elektrischen Widerstandsbahn, mit einer die Widerstandsbahn und mindestens einen Teil des Trägers bedeckenden Mehrlagenschicht. Ferner betrifft die Erfindung ein Verfahren zur Herstellung einer Mehrlagenschicht auf einem Dehnmessstreifen, oder einer Reihen- oder Flächenanordnung von Dehnmessstreifen, beziehungsweise auf einer mit einem Dehnmessstreifen versehenen Kraftmesszelle.

Ein Dehnmessstreifen weist eine auf einem Träger aufgebrachte metallische Widerstandsbahn auf, welche vorzugsweise in Form einer Mäanderstruktur mittels bekanntem Ätzverfahren hergestellt wird. Ferner sind auf dem Träger Anschlusselektroden zur Kontaktierung der Widerstandsbahn vorhanden, wobei diese häufig in einem Arbeitsgang mit der Widerstandsbahn entstehen und somit meist aus demselben Material bestehen. Als Trägermaterial für Dehnmessstreifen werden elektrische Isolatoren verwendet; je nach Anwendungsbereich findet man Glas, Keramik, häufig auch Polymere, glasfaserverstärkte Polymere oder Kompositmaterialien. Dehnmessstreifen sind Messelemente, bei welchen eine mechanische Verformung eine Änderung des elektrischen Widerstandes hervorruft, und welche daher zur Messung der die Verformung bewirkenden Kraft benutzt werden.

In der Wägetechnologie, beispielsweise, werden Dehnmessstreifen zur Wandlung einer durch eine Kraft auf einen Verformungskörper bewirkten Verformung in ein elektrisches Signal verwendet. In einer solchen Kraftmesszelle entsteht eine Auslenkung des vertikal beweglichen Lastaufnehmers gegenüber dem räumlich feststehenden Teil des Verformungskörpers durch die Kraftwirkung einer Last auf der mit dem Lastaufnehmer verbundenen Waagschale. In einer bevorzugten Ausbildungsform weisen solche Verformungskörper vier durch dünne Materialbereiche geformte, elastische Biegestellen auf, welche jeweils an den vier Eckpunkten eines Parallelogramms angeordnet sind, wobei der Lastaufnehmer als vertikal beweglicher Parallelogrammschenkel gegenüber einem vorzugsweise am Waagengehäuse befestigten, ebenfalls vertikalen Parallelogrammschenkel angeordnet ist. Die Grösse der in den dünnen Biegestellen hervorgerufenen Verformung wird mit mindestens einem auf einer der Biegestellen, meist mittels einer elektrisch isolierenden Klebeschicht aufgebrachten Dehnmessstreifen als Änderung seines elektrischen Widerstands gemessen.

Aufgrund ihrer elastischen Eigenschaften werden in der Wägetechnologie bevorzugt polymere Trägermaterialien, insbesondere Polyimide, aber auch Epoxide, Phenolharze, Melamine und Ketone für Dehnmessstreifen verwendet. Polymere Träger haben den Vorteil, dass sie sich aufgrund ihrer geringeren Steifigkeit dem Verformungskörper besser anpassen. Insbesondere wird dadurch die mechanische Belastung der Klebeschicht reduziert. Hystereseeffekte oder eine Zerstörung der einen starren Träger mit einem Verformungskörper verbindenden Klebeschicht treten hier weitaus weniger auf. Zusätzlich ermöglichen polymere Trägermaterialien bei Dehnmessstreifen mit einer mäanderförmig ausgebildeten Widerstandsbahn bekanntermassen eine Lastdriftkompensation durch eine entsprechende Ausbildung der Umkehrstellen der Widerstandsbahn. Im Übrigen sind Dehnmessstreifen mit polymeren Trägern besser handhabbar und preisgünstiger herzustellen.

Polymere besitzen jedoch den Nachteil, dass sie eine relativ hohe Aufnahmefähigkeit für Wasser, aber auch für Lösungsmittel aufweisen, so dass der Feuchtigkeitsgehalt der eine Kraftmesszelle umgebenden Luft, insbesondere aber dessen Änderungen, einen nachhaltigen Einfluss auf das Messresultat hat. Beispielsweise sind die Empfindlichkeit, die Stabilität des Nullpunkts und das Kriechverhalten, die sogenannte Lastdrift, von der Feuchtigkeit - betreffend Wasser und Lösungsmitteln - beeinflusste Parameter einer mit Dehnmessstreifen als Wandler beaufschlagten Kraftmesszelle.

Für die Grössenordnung der durch Änderung dieser Parameter verursachten Änderungen des Wägeresultats wurden einige zehn bis einige hundert parts-permillion (ppm) des Vollausschlages (Signal bei Volllast) im Falle einer stufenförmigen Änderung des Feuchtigkeitsgehalts der eine Kraftmesszelle umgebenden Luft von ca. 30% relativer Feuchtigkeit (rF) auf 85% rF im typischen Temperaturbereich zwischen 10°C und 40°C gemessen.

Einige dieser zu Änderungen der Messresultate führenden Ursachen sind erkannt und physikalisch erklärbar. Zum Ersten nimmt das Trägermaterial eines ungeschützten Dehnmessstreifens die Feuchtigkeit auf und quillt dadurch auf, so dass sich der Abstand der Widerstandsbahn zur Biegestelle vergrössert und dadurch die von der sich verformenden Biegestelle in die Widerstandsbahn induzierte Verformung geringfügig verändert wird. Zum Zweiten ändert aufgenommene Feuchtigkeit die elastischen Eigenschaften des Trägermaterials und damit die Verformungsparameter der Widerstandsbahn. Zum Dritten kann eine erhöhte Feuchtigkeit des Trägermaterials Leckströme zwischen benachbarten Bereichen einer mäanderförmigen Widerstandsbahn, oder gar zwischen der Widerstandsbahn und dem metallischen Verformungskörper hervorrufen. Diese Effekte sind zwar relativ zum Vollausschlag klein, wie oben genannte Messwerte zeigen, jedoch für eine Kraftmesszelle, die höchsten Genauigkeitsanforderungen zu genügen hat, ist ihr Einfluss auf das Messsignal noch zu gross. Daher sind Schutzvorrichtungen und/oder Schutzmassnahmen erforderlich, um ein von Umgebungseinflüssen, insbesondere von auf das Trägermaterial und/oder die Widerstandsbahn einwirkender Feuchtigkeit, weitgehend unbeeinflusstes Messsignal zu erhalten.

Im Stand der Technik sind solche Massnahmen zum Schutz von Dehnmessstreifen vor eine Veränderung des Messsignals bewirkender Feuchtigkeit bekannt. So beschreibt die DE-A- 27 28 916 die Bedeckung eines auf einem Messgrössenaufnehmer aufgebrachten Dehnmessstreifens. Zunächst wird eine elektrisch isolierende Schicht, beispielsweise ein Harz aufgebracht, beziehungsweise der Dehnmessstreifen wird in diese Schicht eingebettet, so dass auch ein Teil des Aufnehmerkörpers um den Dehnmessstreifen abgedeckt wird. Auf die elektrisch isolierende Schicht wird eine Metallschicht angeordnet, die ebenfalls einen Teil des Aufnehmerkörpers um den Dehnmessstreifen abdeckt. Somit kann eine Kapselung gegen Feuchtigkeit für einen bereits auf einem Aufnehmer aufgebrachten Dehnmessstreifen erreicht werden.

Aus der US-5 631 622 ist eine Schutzmassnahme gegen Feuchtigkeit für Dehnmessstreifen bekannt, bei der anschliessend an deren Herstellung in einer Flächenanordnung, noch vor der Vereinzelung der Dehnmessstreifen, zunächst eine elektrisch isolierende Polymerschicht auf die Dehnmessstreifen aufgebracht wird und darauf eine Metallfolie als zusätzliche Abdeckung laminiert wird. Auch nach der Vereinzelung ist ein Dehnmessstreifen grossflächig durch die Metallfolie gegen Feuchtigkeitseinwirkung geschützt.

Um einen Dehnmessstreifen vor Korrosion zu schützen und die Messeigenschaften zu verbessern, wird in der JP-A-7 113 697 vorgeschlagen, dass zur Verhinderung des Eindringens von Feuchtigkeit ein dünner anorganischer Film, beispielsweise SiO₂ mit einer Dicke von etwa 100 Nanometern (nm), sozusagen als Feuchtigkeitsbarriereschicht auf die Oberfläche des Dehnmessstreifens aufgebracht wird. Anschliessend wird ein anorganischer Isolationsfilm, beispielsweise Polyimid mit einer Dicke von etwa 10 Mikrometern (µm) aufgebracht, mittels dessen mikroskopisch kleine Löcher oder Risse im anorganischen Film, sogenannte Pinholes, durch welche weiterhin Feuchtigkeit eindringen könnte, verstopft werden. Die durch diese zweilagige Schicht erzeugte Schutzwirkung ist nicht immer befriedigend, insbesondere bei den für relativ niedrige Lasten ausgelegten, hochempfindlichen Kraftmesszellen.

Die DE-40 15 666 C2 offenbart einen mit Dehnmessstreifen beaufschlagten Kraftaufnehmer, wobei ein Dehnmessstreifen und der daran angrenzende Teil des Trägers mit einer aufgedampften diffusionsdichten elektrisch isolierenden Beschichtung aus Siliziumoxid oder Siliziumkarbid versehen wird, deren Schichtdicke vorzugsweise zwei bis vier Mikrometer beträgt. In einer anderen Ausführungsform kann die Beschichtung auch aus einer unteren Siliziumoxidschicht und einer darüber befindlichen Metallschicht, vorzugsweise einer Nickelschicht, bestehen.

Die Problematik bei den oben genannten Lösungen besteht darin, dass die den Dehnmessstreifen insgesamt bedeckenden Schutzschichten oder-folien, insbesondere die anorganischen Schichten oder Folien mit hoher Barrierewirkung, sei es, dass diese direkt auf den am Messgrössenaufnehmer applizierten Dehnmessstreifen, oder dass diese auf eine grossflächige Anordnung einer Vielzahl von Dehnmessstreifen anschliessend an deren Herstellung aufgebracht werden, aufgrund ihrer vergleichsweise grossen Masse und hohen Steifigkeit ebenfalls das mit dem Dehnmessstreifen ermittelte Messresultat verändern. Diese Messfehler entstehen durch einen sogenannten Kraftnebenschluss, verursacht durch die Bedeckung des Dehmessstreifens mit einer relativ dicken Schicht oder Folie in der Grössenordnung von einigen Mikrometern, wie sie der Stand der Technik offenbart. Insbesondere Metallschichten oder -folien tragen aufgrund ihrer vergleichsweise hohen Steifigkeit bereits ab einer Dicke von wenigen Mikrometern (µm) zu einem messbaren Kraftnebenschluss bei. Ein solcher Kraftnebenschluss entsteht beispielsweise dadurch, dass dicke anorganische Schutzschichten wegen ihrer hohen Steifigkeit signifikant zur Gesamtsteifigkeit der eingangs genannten Biegestellen des Verformungskörpers beitragen. Im Falle von Kraftmesszellen zum Messen kleiner Kräfte ist dies besonders problematisch, da hier die Biegestellen zum Erzielen einer hohen Empfindlichkeit nur eine geringe Dicke aufweisen. Das heisst unerwünschte Veränderungen der elastische Eigenschaften der Schutzschicht, wie zum Beispiel anelastische Nachwirkung, hohe Inelastizität, insbesondere Dehnungshysterese, führen zu einem nicht reproduzierbaren und damit auch softwaretechnisch nicht kompensierbaren Messfehler.

Andererseits ist es natürlich erforderlich, Durchgangsbereiche für die Feuchtigkeit, die bevorzugt in sehr dünnen Feuchtigkeitsbarriereschichten entstehen können, die sogenannten Pinholes, wie sie die JP-A-7 113 697 beschreibt, in einer solchen Barriereschicht weitestgehend zu vermeiden oder zumindest deren Einfluss zu verringern.

Es ist daher die Aufgabe der vorliegenden Erfindung, für auf einen Verformungskörper einer Kraftmesszelle aufgebrachte oder aufbringbare Dehnmessstreifen eine Scutzschicht vorzuschlagen, welche einerseits das Eindringen von Feuchtigkeit verhindert, andererseits einen Kraftnebenschluss vermeidet oder zumindest erheblich verringert.

Diese Aufgabe wird durch eine Kraftmesszelle gemäss Anspruch 1 sowie einen Dehnmessstreifen gemäss Anspruch 17 gelöst. Verfahren zur Erzeugung einer Mehrlagenschicht als Schutzschicht auf einem mit mindestens einem Dehnmessstreifen versehenen Verformungskörper einer Kraftmesszelle nach den Ansprüchen 34 und 40 sowie auf einem einzelnen Dehnmessstreifen, einer Reihenoder Flächenanordnung von Dehnmessstreifen nach den Ansprüchen 35 und 39 tragen ebenfalls zur Lösung der Aufgabe bei. Bevorzugte Ausführungsformen ergeben sich aus den abhängigen Ansprüchen.

Die Erfindung nutzt die ausgezeichneten Barriereeigenschaften, welche die vorwiegend anorganischen Materialien aufweisen, aus und reduziert durch die Verwendung sehr dünner Barriereschichten die an sich sehr hohe Steifigkeit von dicken anorganischen Schichten, welche im Stand der Technik verwendet werden. Dies erfolgt durch eine Mehrfachbeschichtung aus einer abwechselnden Folge von dünnen Barriereschichten und dünnen Polymerschichten. Polymerschichten, die zwar nur eine mässige Barrierewirkung zeigen, und daher oftmals für sich alleine keinen ausreichenden Feuchtigkeitsschutz bieten können, dafür aber eine erheblich geringere Steifigkeit besitzen, sind dazu geeignet, zusammen mit dünnen, vorwiegend anorganischen Barriereschichten der Mehrlagenschicht insgesamt eine niedrige Steifigkeit zu verleihen. Auf diese Weise bleiben die eingangs erwähnten mit der geringen Steifigkeit verbundenen Vorteile eines polymeren Trägermaterials für einen Dehnmessstreifen erhalten. Durch sehr dünnen Barriereschichten innerhalb der Mehrlagenschicht wird die Gefahr oben beschriebenen Kraftnebenschlusses weitestgehend vermieden. Die Steifigkeit einer etwa 5 Nanometer (nm) bis 200 Nanometer (nm), in Einzelfällen bis 500 nm, vorzugsweise jedoch 10 nm bis 50 nm, dicken vorwiegend anorganischen Isolator- oder Metallschicht als Barriereschicht ist gering und liegt etwa in der gleichen Grössenordnung, wie die der ihr benachbarten Polymerschichten.

Die aus der Beschichtungstechnologie für dünne Schichten bekannten, sogenannten Pinholes, das heisst mikroskopisch kleine Löcher oder auch Risse in den Barriereschichten, werden durch die Polymerschichten innerhalb der Mehrlagenschicht ebenfalls reduziert. Grösse und Anzahl der Pinholes in einer Barriereschicht hängen nämlich, neben vielen anderen Beschichtungsparametern und natürlich dem Schichtmaterial, auch von der Rauhigkeit und Ebenheit des Untergrundes ab, aber nur wenig von der Schichtdicke. Durch einen ausebnenden Effekt der Polymerschichten wird die Entstehung von Pinholes weitgehend vermieden oder zumindest deren Einfluss verringert. Die Abfolge von dünnen Barriereschichten mit einer Dicke von etwa 5 nm bis 200 nm, in Einzelfällen bis 500 nm, vorzugsweise jedoch 10 nm bis 50 nm, und Polymerschichten der Dicke von 50 nm bis etwa 1500 nm bewirkt für obengenannte Pinholes erstens eine gewisse Abdichtung und zweitens gewährleistet sie, dass Pinholes zweier "benachbarter" Barriereschichten örtlich versetzt sind, und behindert das Eindringen von Feuchtigkeit an solchen Schwachstellen in Form eines Labyrinths für die Wasser- und die Lösungsmittelmoleküle. Somit kann für Dehnmessstreifen ein effizienter Feuchtigkeitsschutz erzielt werden, ohne dass das Messergebnis beeinträchtigt wird.

Durch die Erfindung wird ein weiterer, mit dicken anorganischen Barriereschichten verbundener Nachteil beseitigt, nämlich der der Gefahr eines Ablösens der Schicht, der sogenannten Delamination. Diese Delamination entsteht dadurch, dass durch die hohe Steifigkeit einer vergleichsweise dicken Barriereschicht der Übergang von der Oberfläche des Dehnmessstreifens zur Barriereschicht erheblichen mechanischen Spannungen ausgesetzt ist. Die erfindungsgemässe Verwendung von dünnen Barriereschichten in abwechselnder Folge mit dünnen Polymerschichten besitzt hinsichtlich des unerwünschten Lösens einer Barriereschicht von ihrer Unterlage eine sehr hohe Stabilität.

In ihrer erfindungsgemässen Verwendung als gesamthaft dünne, mehrlagige Schutzschichten mit einer Abfolge von dünnen, vorwiegend anorganischen Barriereschichten und ausebnenden Polymerschichten bedecken die Mehrlagenschichten einen auf einer Kraftmesszelle bereits applizierten Dehnmessstreifen oder einen auf eine solche aufbringbaren Dehnmessstreifen. Dabei dienen sie hauptsächlich dazu, die negativen Einflüsse ansonsten eindringender Feuchtigkeit auf das mit einer solchen Kraftmesszelle gemessene Ergebnis zu minimieren und gleichzeitig einen eben dieses Messergebnis verfälschenden Kraftnebenschluss, welcher beispielsweise bei der Verwendung dicker Barriereschichten oder -folien entsteht, weitgehend zu verhindern.

Auf diese Weise ist es möglich, die Empfindlichkeit von Kraftmesszellen mit einem oder mehreren auf einem Verformungskörper als Wandler applizierten Dehnmessstreifen nachhaltig zu verbessern, so dass beispielsweise die Auflösung von mit solchen Kraftmesszellen versehenen Waagen einem Bereich zugänglich wird, der bis anhin nur Waagen mit nach dem Prinzip der elektromagnetischen Kraftkompensation arbeitenden Kraftmesszellen zugänglich war.

In der folgenden Beschreibung ist die Erfindung anhand von Ausführungsbeispielen unter Bezugnahme auf die stark schematisierten Zeichnungen näher erläutert. Es zeigen:
- Figur 1: einen Verformungskörper einer Wägezelle mit auf den jeweiligen die Biegelager bildenden Bereichen geringer Materialstärke angebrachten Dehnmessstreifen in dreidimensionaler Darstellung,
- Figur 2: eine vergrösserte, dreidimensionale Darstellung des vom Kreis A in der Figur 1 umschlossenen Bereichs des Verformungskörpers mit einem darauf angebrachten Dehnmessstreifen, der mit einer Mehrlagenschicht versehen ist,
- Figur 3: einen einzelnen Dehnmessstreifen mit einer aufgebrachten Mehrlagenschicht in dreidimensionaler Darstellung,
- Figur 4: einen einzelnen Dehnmessstreifen mit einer aufgebrachten Mehrlagenschicht im Schnitt,
- Figur 5: eine andere Ausführungsform eines Dehnmessstreifens mit einer direkt auf dem Träger aufgebrachten Mehrlagenschicht im Schnitt.

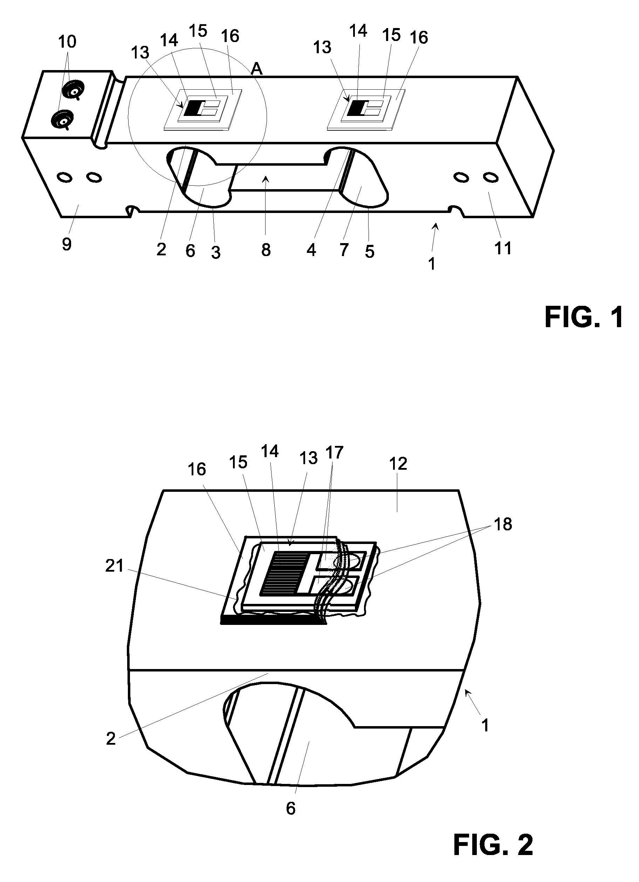

Die Figur 1 zeigt den Verformungskörper 1 einer Wägezelle mit vier an den Eckpunkten eines Parallelogramms angeordneten elastischen Biegestellen 2, 3, 4, 5. Diese werden durch bogenförmig erweiterte Randbereiche 6, 7 einer Ausnehmung 8 im Zentrum des einstückigen Verformungskörpers 1 gebildet. Der links in der Figur dargestellte Lastaufnehmer 9 des Verformungskörpers 1 ist in vertikaler Richtung beweglich. Liegt auf einer hier nicht sichtbaren Waagschale - die im Übrigen mittels mehrerer Schrauben in den Gewinden 10 am Lastaufnehmer 9 befestigbar ist - eine Last auf, so lenkt der Lastaufnehmer 9 unter Verformung der Biegestellen 2, 3, 4 und 5 vertikal nach unten gegenüber einem rechts in der Figur dargestellten feststehenden Teil 11 des Verformungskörpers 1 aus. Zur Messung dieser Verformung sind an den Biegestellen 2, 4 auf der Oberseite 12 des Verformungskörpers 1 Dehnmessstreifen 13 aufgeklebt, welche eine dehnungsabhängige Widerstandsbahn 14, die vorzugsweise mäanderförmig auf einem Träger 15 angeordnet ist, aufweisen. Bevorzugt werden nicht nur an den der Oberseite 12 des Verformungskörpers 1 zugewandten Biegestellen 2, 4 Dehnmessstreifen 13 angeordnet, sondern auch an denjenigen an der Unterseite des Verformungskörpers 1, welche in der Zeichnung nicht sichtbar sind. Die Dehnmessstreifen 13 sind mit einer Mehrlagenschicht 16 zum Schutz gegen eindringende Feuchtigkeit, das heisst Wasser oder Lösungsmittel, versehen, deren Aufbau und Funktionsweise weiter unten noch im Detail erläutert wird. Um den jeweiligen Dehnmessstreifen 13 zu erkennen, ist die Mehrlagenschicht 16 hier durchsichtig gezeichnet. Es besteht allerdings keine Notwendigkeit dafür, dass die Mehrlagenschichten 16 in ihrer realen Ausführung transparent für Licht sind.

In der Ausführungsform, wie sie die Figur 1 zeigt, ist die Mehrlagenschicht 16, beispielsweise durch Aufdampfen, direkt auf den bereits mit dem Verformungskörper 1 verbundenen Dehnmessstreifen 13 aufgebracht worden. Dadurch ist es möglich, den Dehnmessstreifen 13 gesamthaft, das heisst dessen Träger 15 und die Widerstandsbahn 14 und sogar darüber hinaus noch einen Teil des Verformungskörpers 1 zu bedecken und damit vollständig gegen das Eindringen von Feuchtigkeit abzudichten. Insbesondere wird dabei auch das häufig als Klebematerial verwendete Epoxid-Harz, welches hier zum Aufkleben des Dehnmessstreifens auf den Verformungskörper verwendet wurde, und welches über den Flächenrand des Dehnmessstreifens noch etwas hinaus reicht, abgedeckt (siehe Figur 2). Dies bedeutet, dass feuchtigkeitsbedingte Einflüsse des Klebematerials auf das Wägeergebnis ebenfalls verhindert werden. Ebenso werden Einflüsse, die von möglicherweise über die Ränder und Kanten des Dehnmessstreifens in diesen eindringende Feuchtigkeit durch die vollständige Bedeckung derselben mit der Mehrlagenschicht vermieden. Auf diese Weise kann die Änderungsrate der oben beschriebenen, von Änderungen der Feuchtigkeit in der Umgebungsatmosphäre beeinträchtigten Messgrössen einer Kraftmesszelle, nämlich die Empfindlichkeit, die Stabilität des Nullpunkts und das Kriechverhalten, in ihrer Grössenordnung um einen Faktor 10² bis 10⁶ verringert werden. Damit sind die genannten Parameter in den meisten Fällen über die Lebensdauer einer Kraftmesszelle praktisch unabhängig von der sich ändernden Umgebungsfeuchtigkeit.

Es sei an dieser Stelle erwähnt, dass der Wert für die Permeation von Wasser oder Lösungsmitteln im Falle eines unbeschichteten Dehnmessstreifens, welcher auf einem hinsichtlich der Feuchtigkeitsaufnahme bereits optimierten Polyimidträger aufgebracht ist, bei einem Gramm pro Quadratmeter und Tag (1 g/m²/d) liegt, unter den Bedingungen einer Differenz der Umgebungsfeuchtigkeit von 90% rF und einer Temperatur von 23°C. Dieser Wert wird mittels der erfindungsgemässen Beschichtung des Dehnmessstreifens um mehrere Grössenordnungen verringert, so dass die oben genannten Parameter einer Kraftmesszelle eine entsprechende Änderungsrate erfahren.

Da hier die beschriebene Beschichtung eines bereits auf dem Verformungskörper einer Kraftmesszelle applizierten Dehnmessstreifens erfolgt, wird bevorzugt als besonders kostengünstiges Beschichtungsverfahren ein Bedampfen an Luft zur Anwendung kommen. Bei einer solchen, nämlich der als combustion chemical vapor deposition (CCVD) bekannten Beschichtungsmethode wird der Dampf einer vorzugsweise sich in Lösung befindlichen Substanz in einer gasgespeisten Flamme erhitzt, wo sie chemisch reagiert, bevor sie sich auf ein in der Nähe der Flamme befindliches Substrat niederschlägt.

In der Figur 2 ist der vom Kreis A der Figur 1 umschlossene Bereich des Verformungskörpers 1 vergrössert dargestellt. Es ist wie in der Figur 1 der auf der Biegestelle 2 applizierte Dehnmessstreifen 13 mit der diesen und einen Teil der Oberseite 12 des Verformungskörpers 1, insbesondere auch die oben erwähnte Klebeschicht 21 bedeckenden Mehrlagenschicht 16 zu sehen. Zur Verdeutlichung ist auch hier die Mehrlagenschicht 16 wieder durchsichtig und auf ihrer in der Figur nach rechts weisenden Seite gebrochen gezeichnet. Ausserdem sind die Anschlusselektroden 17 der mäanderförmigen Widerstandsbahn zu sehen. Diese müssen selbstverständlich auch nach dem Aufbringen einer Mehrlagenschicht 16 für den Anschluss des detektierenden Brückenstromkreises (hier nicht gezeigt) zugänglich sein. Gleichzeitig soll aber die Mehrlagenschicht 16 beim Kontaktieren nicht über die Fläche der Kontaktierstelle hinaus beschädigt werden. Daher können zum Beispiel die Anschlusselektroden 17 bereits vor dem Beschichten mit einem Tropfen des elektrisch leitfähigen Verbindungsmaterials beaufschlagt, d.h. die in der Figur als Oval gezeichnete Kontaktierstellen 18 geschaffen werden, wobei beim Kontaktiervorgang lediglich der Teil der Mehrlagenschicht 16, welcher die Kontaktierstelle 18 bedeckt, geöffnet wird und weitere Bereiche der Mehrlagenschicht 16 unbeschädigt bleiben.

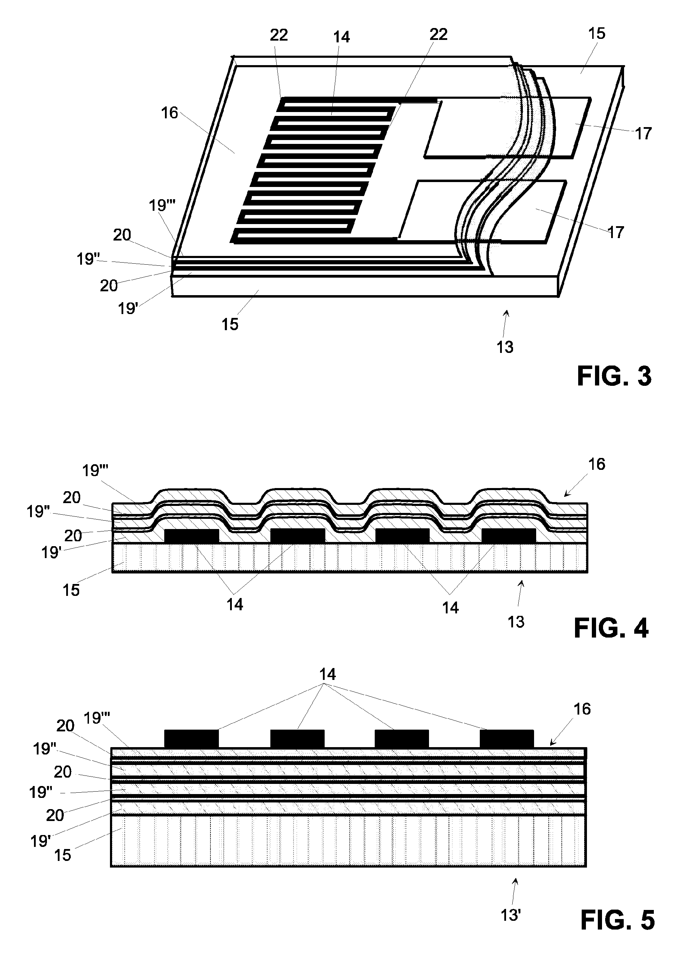

Figur 3 zeigt in dreidimensionaler Darstellung einen einzelnen Dehnmessstreifen 13, der mit einer Mehrlagenschicht 16, welche im Übrigen auch für eine Mehrlagenschichtanordnung gemäss den Figuren 1 und 2 verwendet werden kann, versehen ist. Der Übersicht halber ist auch hier wiederum die Mehrlagenschicht 16 durchsichtig und gebrochen gezeichnet. Sie besteht aus einer regulären Abfolge von Polymerschichten 19, vorzugsweise aus einem Polyacrylat oder Polymethacrylat, und Barriereschichten 20, aus einem vorwiegend anorganischen Isolator, wobei die Polymerschichten 19 eine Dicke von typischerweise 50 bis 500 nm, vorzugsweise 100 nm bis 200 nm aufweisen, in Einzelfällen aber auch darüber hinausgehend eine Schichtdicke von bis zu 1500 nm besitzen können. Die Schichtdicke der Barriereschichten 20 liegt typischerweise zwischen 5 nm und 200 nm, vorzugsweise zwischen 10 nm und 50 nm, kann in Einzelfällen auch bis zu 500 nm betragen.

Der Aufbau und die bevorzugte Abfolge der Einzellagen oder -schichten in der Mehrlagenschicht 16 kommt in der Figur 4 zum Ausdruck, welche einen Schnitt durch einen Dehnmessstreifen 13 mit einer aus insgesamt fünf dünnen Einzelschichten bestehenden aufgebrachten Mehrlagenschicht 16 zeigt. Allerdings ist die Zeichnung stark schematisiert und es sind die jeweilige Dicke des Trägers 15, der Widerstandsbahn 14 und der Barriereschichten 20 sowie der Polymerschichten 19', 19", 19"' hier nicht massstabgetreu gezeichnet.

Die dem Träger 15 und in den Bereichen der auf dem Träger 15 aufgebrachten Widerstandsbahn 14 letzterer direkt benachbarte und Träger und Widerstandsbahn berührende erste Schicht 19' der Mehrlagenschicht 16 ist bevorzugt eine Acrylat-Polymerschicht, welche dazu dient, Rauhigkeiten von Träger 15 und Widerstandsbahn 14 zu glätten. Sie kann unter Umständen eine höhere Dicke aufweisen, als die weiteren polymeren Zwischenschichten 19" der Mehrlagenschicht 16. Mit solchen Acrylat-Polymerschichten kann die Rauhigkeit einer Unterlage im Nanometerbereich ausgeebnet werden. Auf diese Weise wird die Bildung einer fehlstellenarmen folgenden Barriereschicht 20 begünstigt, das heisst, dass das Entstehen von Pinholes in der ersten Barriereschicht 20 durch die glättende Wirkung ihrer Unterlage verringert wird.

Ein weiterer Grund, die erste Polymerschicht 19' der Mehrlagenschicht 16 verglichen mit den übrigen Polymerschichten 19", 19"' etwas dicker aufzubringen, besteht darin, dass insbesondere für die Ausgestaltungen gemäss den Figuren 1 und 2 die Forderung besteht, die seitlichen Kanten der Widerstandsbahn 14, insbesondere jedoch diejenigen des Trägers 15 und die überstehende Klebeschicht 21 vollständig zu bedecken. Eine genannte Polymerschicht erfüllt diese Forderung durch ihre einerseits auf Nanometerskala ausebnenden Eigenschaften und andererseits auf Mikrometerskala konformalen, das heisst auch vorwiegend senkrecht zur Schichtebene verlaufende Flächen abdeckenden, Eigenschaften. Somit schafft sie die Voraussetzung für die Bildung von gleichmässig dicken und fehlstellenarmen Barriereschichten 20 und folgenden Schichten der Mehrlagenschicht 16.

Auf die erste Barriereschicht 20 folgt eine polymere Zwischenschicht. Ihre Funktion ist neben der Stabilisierung der ersten Barriereschicht 20 auch eine Reduktion der Entstehung von Pinholes in einer weiteren, der Zwischenschicht 19" folgenden Barriereschicht 20 durch ihre glättende Wirkung. Insbesondere wird aber durch die Zwischenschicht 19" vermieden, dass die dennoch in geringer Anzahl entstandenen Pinholes einer zweiten Barriereschicht 20 sich an solchen der ersten Barriereschicht 20 fixieren, was den Feuchtigkeitsdurchgang wieder begünstigen würde. Vielmehr entsteht durch die voneinander unabhängige Lokalisierung der Pinholes in der ersten und in der zweiten Barriereschicht 20 eine Art Labyrinth für eindringende Feuchtigkeit, insbesondere Wasser oder Lösungsmittelmoleküle. Dieser Labyrintheffekt führt in einer mehrlagigen Beschichtung mit aufeinander folgenden Barriereschichten 20 und Polymerschichten 19 zu einer drastischen Reduktion eindringender Feuchtigkeit.

Die in der Figur 4 gezeigte Mehrlagenschicht 16 weist fünf dünne Einzelschichten auf, wovon die erste Schicht die ausebnende Polymerschicht 19' ist und die die Grenzschicht zur Umgebungsatmosphäre bildende Schicht wiederum eine Polymerschicht 19"' ist, um die Mehrlagenschicht 16 vor allem gegen mechanische Beschädigung zu stabilisieren. Die Mehrlagenschicht 16 kann noch weitere Einzelschichten aufweisen; die Sequenz aus Polymerschicht 19 und Barriereschicht 20 kann im Prinzip beliebig oft wiederholt werden. Die Mehrlagenschicht 16 kann aber auch aus insgesamt nur drei dünnen Einzelschichten bestehen, bevorzugterweise aus einer Abfolge von Polymerschicht 19' - Barriereschicht 20 - Polymerschicht 19"'.

Als Materialien für die Barriereschichten 20 sind eine Vielzahl der bekannten, in verschiedenen Beschichtungsverfahren aufbringbaren vorwiegend anorganischen Isolatoren verwendbar. Als Beispiele seien hier Oxide, Nitride, Fluoride, Karbide, Boride oder Kombinationen davon, insbesondere Oxi-Nitride, oder auch Mischkeramiken genannt. Insbesondere haben sich Siliziumoxid, Titanoxid, Chromoxid, Aluminiumoxid, Siliziumnitrid und Titannitrid als Material für die Barriereschichten 20 bewährt. Auch die sogenannten "diamond-like carbon"-Schichten können als mögliche Barriereschichten 20 Verwendung finden.

Als weitere Materialien für die Barriereschichten 20 kommen insbesondere auch Metalle, beispielsweise Silber, Aluminium, Gold, Chrom, Kupfer, Nickel, Titan, sowie Legierungen, beispielsweise Nickel-Kobalt-Legierungen, oder intermetallische Verbindungen, zum Beispiel aus Aluminium und Kupfer, aus Wolfram und Kupfer oder aus Titan und Aluminium in Frage.

Neben Acrylat-Polymeren können für die Polymerschichten 19 auch weitere polymere Materialien Verwendung finden. Als Beispiele seien angeführt: polymere Amide, Alkyde, Styrole, Xylylene, Phenylene, Aldehyde, Estere, Urethane, Epoxide, Imide, Phenole, Ketone sowie Fluorpolymere oder Copolymere, wobei die Auflistung hier nicht abschliessend sein kann. Letztendlich entscheidet die Optimierung zwischen Barrierewirkung, Kombinierbarkeit der Barriereschicht 20 und der Polymerschicht 19, sowie Wirtschaftlichkeit der Beschichtungsmethode über die Verwendung des Barriereschichtmaterials ebenso wie über die Verwendung des Polymermaterials.

Ungeachtet der Materialfrage besitzt eine dünne Barriereschicht 20 eine entsprechend geringe Steifigkeit. Daher ist im Zusammenwirken mit der an sich flexiblen Polymerschicht 19 nur ein minimaler Kraftnebenschluss durch das Aufbringen einer Mehrlagenschicht 16 mit ultradünnen Barriereschichten 20 auf Dehnmessstreifen 13 zu befürchten. Aus dem selben Grund ist die Gefahr des Ablösens der ultradünnen Barriereschichten 20 von ihrer Unterlage (Delamination) massiv reduziert und konnte für im Rahmen der Erfindung verwendete Materialien nicht beobachtet werden.

Die erfindungsgemässe Beschichtung von Dehnmessstreifen 13 mit einer Mehrlagenschicht 16 kann im Anschluss an die Herstellung der Dehnmessstreifen 13 erfolgen, solange diese noch in einer Reihen- oder Flächenanordnung vorhanden sind. Bei einer Vereinzelung der Dehnmessstreifen 13 bleiben allerdings die Seitenflächen, insbesondere der Trägerfolie, offen und eindringender Feuchtigkeit zugänglich. Aufgrund der Flächenverhältnisse von Oberseite und Seitenkanten eines Dehnmessstreifens ist jedoch die Schutzwirkung der erfindungsgemässen Mehrlagenschicht 16 immer noch recht hoch. Es können mit dieser äusserst effizienten Beschichtungsmethode Dehnmessstreifen 13 hergestellt werden, deren Feuchtigkeitsaufnahme, abhängig von den verwendeten Materialien um einen Faktor 50 bis 1000 geringer ausfällt, im Vergleich zu unbeschichteten Dehnmessstreifen. Für den Fall, dass eine höhere Barrierewirkung, als die genannte erreicht werden müsste, ist es selbstverständlich auch möglich einzelne Dehnmessstreifen 13, gegebenenfalls rundum, zu beschichten, wodurch die Seitenflächen des Trägers 15, zumindest bei vorsichtiger Handhabung, abgedeckt wären.

Innerhalb einer Mehrlagenschicht 16 sind die einzelnen Barriereschichten 20 nicht notwendigerweise aus dem selben Material. Ebenso wenig sind die Polymerschichten 19 auf ein einziges Material beschränkt.

Im Rahmen der Erfindung ist es auch denkbar, eine oder mehrere Barriereschichten 20 aus Teilschichten aufzubauen, sei dies dadurch, dass dabei identische oder dass verschiedene Materialien Anwendung finden. Solche Barriere-Mehrfachlagen mit verschiedener innerer Struktur erhöhen den Labyrintheffekt. Auch für einzelne Polymerschichten 19', 19", 19"' ist eine Zusammensetzung aus Teilschichten denkbar. Von Bedeutung ist hierbei einzig, dass die Barriereschichten 20 und die Polymerschichten 19 dünn sind, d.h. ihre jeweilige Schichtdicke im Bereich oben genannter Werte liegt, und dass die Gesamtdicke der Mehrlagenschicht 16 für auf hochempfindliche Kraftmesszellen applizierbare Dehnmessstreifen einen Mikrometer, höchstens jedoch zehn Mikrometer nicht überschreitet, und somit kein wesentlicher Kraftnebenschluss entsteht.

Die jeweilige Dicke der einzelnen Barriereschichten oder Polymerschichten innerhalb einer Mehrlagenschicht, insbesondere aber deren Gesamtschichtdicke ist, abgesehen davon, dass auch verwendete Beschichtungsmaterialien oder sonstige Beschichtungsparameter eine Rolle spielen, eine Funktion der Lastkapazität sowie der geforderten Empfindlichkeit der mit solchen beschichteten Dehnmessstreifen versehenen Kraftmesszellen. Das heisst, je höher die Lastkapazität einer Kraftmesszelle ist, desto grösser ist auch der noch tolerierbare Kraftnebenschluss, welcher, wie oben erwähnt, durch eine Schutzschicht auf dem Dehnmessstreifen verursacht werden kann. Es gilt aber prinzipiell der Grundsatz, je dünner eine Mehrlagenschicht ist, insbesondere je dünner die darin enthaltenen Barriereschichten sind, desto besser ist sie geeignet für eine Verwendung als Schutzschicht auf Dehnmessstreifen. Es ist jedoch, sozusagen als Erfahrungswert, davon auszugehen, dass eine im Bereich der Wägetechnologie eingesetzte Kraftmesszelle, wenn sie für Lasten unterhalb eines Kilogramms spezifiziert ist, eine Beschichtung ihrer Dehnmessstreifen aufweisen kann, deren Gesamtdicke, das heisst die Dicke der Mehrlagenschicht, bis zu zehn Mikrometer betragen kann, vorzugsweise jedoch unterhalb von fünf Mikrometern, insbesondere aber unterhalb von einem Mikrometer liegt. Für Kraftmesszellen einer Kapazität bis zu fünf Kilogramm kann die Gesamtdicke der Mehrlagenschicht bis zu fünfzehn Mikrometer betragen, liegt jedoch vorzugsweise unterhalb von zehn Mikrometern, insbesondere aber unterhalb von fünf Mikrometern. Auf Kraftmesszellen mit einer Kapazität oberhalb von fünf Kilogramm bis zu etwa 50 Kilogramm applizierte Dehnmessstreifen können mit einer Mehrlagenschicht oder auch mit einer eine Mehrlagenschicht aufweisenden Folie im Mikrometerbereich bedeckt werden, ohne dass der Kraftnebenschluss einen nennenswerten Einfluss auf das Wägeresultat ausübt.

Bevorzugt ist, dass die Mehrlagenschicht 16 aus einer abwechselnden Folge von einer Polymerschicht 19, insbesondere einer Polyacrylat- oder Polymethacrylat-Schicht und einer Barriereschicht 20, vorzugsweise aus Siliziumoxid oder Aluminiumoxid, aufgebaut ist, wobei aufgrund der Wahl eines effizienten Beschichtungsverfahrens die jeweils verwendeten Materialien einheitlich sind, ebenso wie auch die einzelnen Schichten in sich homogen sind. Die Grenzschicht zum Träger 15 beziehungsweise zur Widerstandsbahn 14 und den Anschlusselektroden 17 ist eine Polymerschicht 19', für die Grenzschicht zur Umgebungsatmopshäre ist dies nicht zwingend notwendig, wenngleich bevorzugt, da eine abschliessende Polymerschicht 19"' einen guten mechanischen und gegebenenfalls chemischen Schutz für eine letzte Barriereschicht 20 bietet. Dies bedeutet, dass gegebenenfalls die Wahl des verwendeten Polymermaterials für die abschliessende Polymerschicht 19"' hinsichtlich der Eigenschaft, einen besonders guten mechanischen und/oder chemischen Schutz bieten zu können, erfolgt.

Es kann sich auch als erforderlich erweisen, bezüglich der Fläche des Dehnmessstreifens 13 lediglich eine Teilbeschichtung auf einen solchen aufzubringen. Dabei kann ausschliesslich die Mäanderstruktur der Widerstandsbahn 14 beschichtet werden, da hier eindringende Feuchtigkeit die grösste Wirkung zeigt, oder die Beschichtung erfolgt bevorzugt im Bereich der Umkehrstellen 22 der Mäanderstruktur (siehe Figur 3) der Widerstandsbahn 14. Um gegebenenfalls auftretende Probleme bei der elektrischen Kontaktierung der Widerstandsbahn 14 an den Anschlusselektroden 17 zu vermeiden, können auch diese frei von einer Beschichtung belassen werden. Hierzu ist es notwendig beim Beschichten mit Masken zu arbeiten, die die zu beschichtenden Bereiche frei lassen.

Der Erfindungsgedanke umfasst auch die grossflächige Herstellung von mit einer beschriebenen Mehrlagenschicht 16 versehenen Polymerfolien, beispielsweise Polyimidfolien, die anschliessend an die Beschichtung als Trägermaterial für Dehnmessstreifen verwendet werden, das heisst mit einer Widerstandsbahn auf der beschichteten Seite versehen werden. Ein solcher Dehnmessstreifen 13' ist in der Figur 5 stark schematisiert dargestellt, wobei die Mehrlagenschicht 16 hier aus sieben Einzelschichten besteht. Die Applikation solcher Dehnmessstreifen 13' beispielsweise auf den Verformungskörper 1 einer Kraftmesszelle erfolgt in gewohnter Weise. In einem solchen Fall ist zwar nicht die Widerstandsbahn 14 per se vor Änderungen der Feuchtigkeit der Umgebungsatmosphäre geschützt, jedoch ist der vorwiegend durch Feuchtigkeitsaufnahme oben beschriebene Messfehler verursachende Träger 15 weitest gehend geschützt, so dass die feuchtigkeitsbedingten Einflüsse auf das Messresultat zumindest reduziert sind.

Die Applikation eines Dehnmessstreifens 13', dessen Widerstandsbahn 14 auf der mit der Mehrlagenschicht 16 versehenen Seite des Trägers 15 aufgebracht ist, auf den Verformungskörper 1 einer Kraftmesszelle kann auch in der Weise erfolgen, dass die Widerstandsbahn 14 dem Verformungskörper 1 zugewandt in ein als elektrisch isolierende Zwischenschicht wirkendes Klebematerial eingebettet wird. Hier übernimmt die vorzugsweise nicht allzu dicke, beschichtete Trägerfolie die Aufgabe der Schutzschicht und schützt vor allem die Klebeschicht 21 und die Widerstandsbahn 14 vor den Einflüssen sich ändernder Feuchtigkeit.

Ebenso kann auch eine bereits mit einer Mehrlagenschicht 16 zum Schutz gegen eindringende Feuchtigkeit versehene Trägerfolie auf ihrer unbeschichteten Seite mit der dehnungsabhängigen Widerstandsbahn 14 versehen werden. In diesem Falle ist ein solcher Dehnmessstreifen mit der Widerstandsbahn 14 dem Verformungskörper 1 zugewandt in ein Klebematerial mit sehr guten elektrisch isolierenden Eigenschaften eingebettet zu applizieren. Auch hier ist für Kraftmesszellen mit niederer bis mittlerer Lastkapazität, zur weitgehenden Vermeidung von Kraftnebenschlüssen, eine Trägerfolie mit einer Dicke von bevorzugt nur wenigen Mikrometern zu wählen. Für die Verwendung solcher Dehnmessstreifen in einer Kraftmesszelle kann es sich auch als nützlich erweisen, den Verformungskörper 1 bereits vor dem Applizieren der Dehnmessstreifen, zumindest im Bereich der Biegestellen, mit einer elektrisch isolierenden Bedeckung zu versehen, so dass die Klebeschicht nicht ausschliesslich die Funktion der elektrischen Isolation zu übernehmen hat.

Es ist im Übrigen unbenommen, auch beidseitig beschichtete Trägerfolien für die beschriebenen Applizierverfahren zu verwenden.

Eine Mehrlagenschicht 16, bestehend aus einer abwechselnden Folge von Polymerschichten 19 und Barriereschichten 20 ist auch ohne weiteres auf eine dünne, Polymerfolie, beispielsweise aus einem Polyacrylat, Polymethacrylat, Polyimid, PET, Fluorpolymer oder einem der eingangs für die Verwendung als Trägermaterial erwähnten Polymere aufbringbar. Die beschichtete Folie wird anschliessend auf einen Dehnmessstreifen 13 laminiert und zwar entweder mit der Mehrlagenschicht 16 oder mit der dünnen Polymerfolie in Kontakt zum Träger 15 und der Widerstandsbahn 14. Von Vorteil ist hierbei, wie auch bei einer oben beschriebenen Beschichtung der Trägerfolie, dass die Folienbeschichtung als industrielles Verfahren sehr preisgünstig ist.

Eine solche als Mehrlagenschicht ausgebildete Folie kann nun auch über einen Dehnmessstreifen 13, welcher direkt auf einem Verformungskörper 1 einer vorzugsweise für mittlere bis höhere Lastkapazitäten ausgelegten Kraftmesszelle appliziert ist, angebracht werden. Dabei muss der Dehnmessstreifen nicht zwingend mit einer Folie als Träger 15 verbunden sein, sondern kann direkt auf eine elektrisch isolierende Bedeckung des Verformungskörpers 1 aufgebracht sein, wobei der Verformungskörper 1 mit der elektrisch isolierenden Bedeckung, die beispielsweise durch Eloxieren eines Aluminium-Verformungskörpers entsteht, als Träger für die Widerstandsbahn 14 und die Anschlusselektroden 17 wirkt.

Die bevorzugte Methode zur Herstellung einer Mehrlagenschicht 16 auf einem einzelnen Dehnmessstreifen 13 oder einem bereits auf dem Verformungskörper 1 einer Kraftmesszelle applizierten Dehnmessstreifen 13 umfasst die folgenden Schritte: Aufbringen einer im Nanometerbereich ausebnenden, konformalen Polymerschicht 19' mit einer Dicke, die zwischen 200 nm und 1500 nm liegt, auf mindestens einem Teil der Widerstandsbahn 14 und/oder der Anschlusselektroden 17 und/oder des Trägers 15 und gegebenenfalls dem Verformungskörper 1, Abscheiden einer etwa 20 nm dicken, Barriereschicht 20 auf der Polymerschicht 19', Abscheiden einer weiteren dünnen Polymerschicht 19" mit einer Dicke von etwa 100 nm bis 200 nm auf der Barriereschicht 20, beliebig häufige Wiederholung des Vorgangs des Beschichtens mit einer Barriereschicht 20 und einer Polymerschicht 19", wobei als Grenzschicht zur Umgebungsatmosphäre eine Polymerschicht 19"' oder eine dünne Barriereschicht 20 vorhanden sein kann.

Analog wird bei der Beschichtung einer Reihen- oder Flächenanordnung von Dehnmessstreifen verfahren.

Es kann sich als nützlich erweisen, vor Beginn des Beschichtungsvorgangs die Unterlage der Mehrlagenschicht 16, sei dies der Träger 15, eine Trägerfolie, die Widerstandsbahn 14 oder ein Teil des Verformungskörpers 1 einer Kraftmesszelle einer Plasmareinigung oder einer chemischen Reinigung zu unterziehen.

Beim Aufbringen der Mehrlagenschicht steht eine grosse Auswahl von Beschichtungsverfahren zu Verfügung. Es seien hier für das Erzeugen der Barriereschichten 20 beispielhaft Aufdampfen im Vakuum, Aufdampfen an Luft, Plasmabeschichten, "sputtern", Sol-Gelverfahren, "chemical vapor deposition (CVD)", "combustion chemical vapor deposition (CCVD)", "plasma enhanced chemical vapor deposition (PECVD)", "plasma impulse chemical vapor deposition (PICVD)", sowie, insbesondere für das Aufbringen von Metallen, elektrochemisches Abscheiden, genannt. Für das Aufbringen der Polymerschichten sind folgende Beschichtungsmethoden möglich: Aufdampfen im Vakuum, Aufdampfen an Luft, insitu-Polymersisation von durch "flash evaporation" oder Plasmabeschichten aufgebrachten Monomeren oder Oligomeren, sowie Elektrophorese, Kataphorese oder Anaphorese.

Als besonders effizient erweist sich ein Verfahren zum Beschichten von auf dem Verformungskörper 1 einer Kraftmesszelle aufbringbaren oder aufgebrachten Dehnmessstreifen 13, mit einer Mehrlagenschicht 16, wenn die Herstellung der Mehrlagenschicht 16 durch abwechselnde Beschichtung mit Polymerschichten 19 und Barriereschichten 20 innerhalb einer Beschichtungsapparatur mittels zweier Quellen in einem Arbeitsgang erfolgt.

### Bezugszeichenliste

- 1: Verformungskörper
- 2: Biegestelle
- 3: Biegestelle
- 4: Biegestelle
- 5: Biegestelle
- 6: bogenförmig erweiterter Randbereich
- 7: bogenförmig erweiterter Randbereich
- 8: Ausnehmung
- 9: Lastaufnehmer
- 10: Gewinde
- 11: Feststehender Teil
- 12: Oberseite des Verformungskörpers
- 13,13': Dehnmessstreifen
- 14: Widerstandsbahn
- 15: Träger
- 16: Mehrlagenschicht
- 17: Anschlusselektroden
- 18: Tropfen des elektrischen Verbindungsmaterials
- 19: Polymerschicht
- 19': Erste Polymerschicht
- 19": Polymere Zwischenschichten
- 19"': Polymere Abdeckschicht
- 20: Barriereschichten
- 21: Klebematerial, Klebeschicht
- 22: Umkehrstellen

## Patentansprüche

1. Kraftmesszelle mit einem Verformungskörper (1) und mit mindestens einem auf dem Verformungskörper (1) aufgebrachten Dehnmessstreifen (13, 13'), der eine dehnungsempfindliche, auf einem Träger (15) aufgebrachte elektrische Widerstandsbahn (14) und Anschlusselektroden (17) zur Kontaktierung der Widerstandsbahn (14) aufweist, wobei der mindestens eine Dehnmessstreifen (13, 13') und gegebenenfalls ein Teil des Verformungskörpers (1) mit einer Mehrlagenschicht (16) als Schutzschicht versehen ist, **dadurch gekennzeichnet, dass** sich die Mehrlagenschicht (16) aus einer abwechselnden Folge von einer Polymerschicht (19) und einer Barriereschicht (20) zusammensetzt, wobei die Mehrlagenschicht (16) aus mindestens drei dünnen Einzelschichten gebildet wird.

2. Kraftmesszelle nach Anspruch 1, **dadurch gekennzeichnet, dass** eine Polymerschicht (19') die Grenzschicht zum Dehnmessstreifen (13, 13') und gegebenenfalls dem von der Mehrlagenschicht (16) bedeckten Teil des Verformungskörpers (1) bildet

3. Kraftmesszelle nach Anspruch 1 oder 2, **dadurch gekennzeichnet, dass** eine Polymerschicht (19"') die Grenzschicht der Mehrlagenschicht (16) zur Umgebungsatmosphäre bildet

4. Kraftmesszelle nach Anspruch 1, 2 oder 3, **dadurch gekennzeichnet, dass** eine Barriereschicht (20) eine Schichtdicke zwischen 5 nm und 200 nm, in Einzelfällen bis zu 500 nm, vorzugsweise zwischen 10 nm und 50 nm, aufweist.

5. Kraftmesszelle nach einem der Ansprüche 1 bis 4, **dadurch gekennzeichnet, dass** eine Polymerschicht (19) eine Schichtdicke zwischen 50 nm und 1500 nm, insbesondere eine Schichtdicke zwischen 100 nm und 200 nm, aufweist.

6. Kraftmesszelle nach einem der Ansprüche 1 bis 5, **dadurch gekennzeichnet, dass** die Gesamtschichtdicke der Mehrlagenschicht (16) bei maximal zehn Mikrometer, vorzugsweise bei einem Wert von kleiner als einem Mikrometer liegt.

7. Kraftmesszelle nach einem der Ansprüche 2 bis 6, **dadurch gekennzeichnet, dass** die die Grenzschicht zum Dehnmessstreifen (13, 13') und gegebenenfalls zum von der Mehrlagenschicht (16) bedeckten Teil des Verformungskörpers (1) bildende Polymerschicht (19') zum Ausgleich von Rauhigkeiten an der Oberfläche des Dehnmessstreifens (13, 13') und des Verformungskörpers (1) eine grössere Schichtdicke aufweist, als die im Aufbau der Mehrlagenschicht (1) folgenden Polymerschichten(19", 19"').

8. Kraftmesszelle nach einem der Ansprüche 1 bis 7, **dadurch gekennzeichnet, dass** eine Barriereschicht (20) aus einem Isolatormaterial, insbesondere einem Oxid, Borid, Nitrid, Fluorid, Karbid, einer Kombination aus solchen oder einer Mischkeramik, oder aus "diamond-like-carbon" besteht.

9. Kraftmesszelle nach Anspruch 8, **dadurch gekennzeichnet, dass** eine Barriereschicht (20) aus einem Siliziumoxid, Siliziumnitrid, Titanoxid, Titannitrid, Aluminiumoxid oder Chromoxid besteht

10. Kraftmesszelle nach einem der Ansprüche 1 bis 7, **dadurch gekennzeichnet, dass** eine Barriereschicht (20) aus Metall, insbesondere aus Aluminium, Silber, Gold, Kupfer, Chrom, Titan, Nickel, einer Metall-Legierung oder einer intermetallischen Verbindung besteht.

11. Kraftmesszelle nach einem der Ansprüche 1 bis 10, **dadurch gekennzeichnet, dass** eine Barriereschicht (20) mindestens zwei Teilschichten aufweist, wobei die Teilschichten aus gleichen oder verschiedenen Materialien, insbesondere anorganischen Materialien bestehen.

12. Kraftmesszelle nach einem der Ansprüche 1 bis 11, **dadurch gekennzeichnet, dass** eine Polymerschicht (19) mindestens zwei Teilschichten aufweist, wobei die Teilschichten aus gleichen oder verschiedenen polymeren Materialien bestehen.

13. Kraftmesszelle nach einem der Ansprüche 1 bis 12, **dadurch gekennzeichnet, dass** eine Barriereschicht (20) mittels physikalischer oder chemischer Beschichtungsmethoden, insbesondere mittels Aufdampfen im Vakuum, Aufdampfen an Luft, Plasmabeschichten, "sputtern", Sol-Gelverfahren, "chemical vapor deposition", "combustion chemical vapor deposition", "plasma enhanced chemical vapor deposition", "plasma impulse chemical vapor deposition", oder, insbesondere für das Aufbringen von Metallen, elektrochemisches Abscheiden, erzeugt wird.

14. Kraftmesszelle nach einem der Ansprüche 1 bis 13, **dadurch gekennzeichnet, dass** eine Polymerschicht (19) mittels Aufdampfen im Vakuum, Aufdampfen an Luft, insitu-Polymerisation von durch "flash evaporation" oder Plasmabeschichten aufgebrachten Monomeren oder Oligomeren, durch "spin-coating", Elektrophorese, Kataphorese oder Anaphorese erzeugt wird.

15. Kraftmesszelle nach einem der Ansprüche 1 bis 14, **dadurch gekennzeichnet, dass** die Widerstandsbahn (14) mäanderförmig ist.

16. Kraftmesszelle nach Anspruch 15 **dadurch gekennzeichnet, dass** die Mehrlagenschicht (16) als Teilbeschichtung des Dehnmessstreifens (13) im Bereich der Widerstandsbahn (14), insbesondere in den Bereichen der Umkehrstellen (22) der mäanderförmigen Widerstandsbahn (14) vorhanden ist.

17. Dehnmessstreifen mit einer dehnungsempfindlichen, auf einem Träger (15) aufgebrachten elektrischen Widerstandsbahn (14) und Anschlusselektroden (17) zur Kontaktierung der Widerstandsbahn (14), wobei der Dehnmessstreifen (13, 13') mit einer mindestens einen Teil des Trägers (15) und/oder der Widerstandsbahn (14) und/oder der Anschlusselektroden (17) bedeckenden Mehrlagenschicht (16) als Schutzschicht versehen ist, **dadurch gekennzeichnet, dass** sich die Mehrlagenschicht (16) aus einer abwechselnden Folge von einer Polymerschicht (19) und einer Barriereschicht (20) zusammensetzt, wobei die Mehrlagenschicht (16) aus mindestens drei dünnen Einzelschichten besteht.

18. Dehnmessstreifen nach Anspruch 17, **dadurch gekennzeichnet, dass** eine Polymerschicht (19') die Grenzschicht der Mehrlagenschicht (16) zum Träger (15) und/oder der Widerstandsbahn (14) bildet.

19. Dehnmessstreifen nach Anspruch 17 oder 18, **dadurch gekennzeichnet, dass** eine Polymerschicht (19"') die Grenzschicht der Mehrlagenschicht (16) zur Umgebungsatmosphäre bildet

20. Dehnmessstreifen nach Anspruch 17, 18 oder 19, **dadurch gekennzeichnet, dass** eine Barriereschicht (20) eine Schichtdicke zwischen 5 nm und 200 nm, in Einzelfällen bis zu 500 nm, vorzugsweise zwischen 10 nm und 50 nm, aufweist.

21. Dehnmessstreifen nach einem der Ansprüche 17 bis 20, **dadurch gekennzeichnet, dass** eine Polymerschicht (19) eine Schichtdicke zwischen 50 nm und 1500 nm, insbesondere eine Schichtdicke zwischen 100 nm und 200 nm, aufweist.

22. Dehnmessstreifen nach einem der Ansprüche 17 bis 21, **dadurch gekennzeichnet, dass** die Gesamtschichtdicke der Mehrlagenschicht (16) bei maximal zehn Mikrometer, vorzugsweise bei einem Wert von kleiner als einem Mikrometer liegt.

23. Dehnmessstreifen nach einem der Ansprüche 18 bis 22, **dadurch gekennzeichnet, dass** die die Grenzschicht zum Träger (15) und gegebenenfalls zur Widerstandsbahn (14) bildende Polymerschicht (19') zum Ausgleich von Rauhigkeiten an der Oberfläche des Trägers (15) und der Widerstandsbahn (14) eine grössere Schichtdicke aufweist, als im Aufbau der Mehrlagenschicht (16) folgende Polymerschichten (19", 19"').

24. Dehnmessstreifen nach einem der Ansprüche 17 bis 23, **dadurch gekennzeichnet, dass** eine Barriereschicht (20) aus einem Isolatormaterial, insbesondere einem Oxid, Borid, Nitrid, Fluorid, Karbid, aus einer Kombination aus solchen oder einer Mischkeramik, oder aus "diamond-iike-carbon" besteht.

25. Dehnmessstreifen nach Anspruch 24, **dadurch gekennzeichnet, dass** eine Barriereschicht (20) aus einem Siliziumoxid, Siliziumnitrid, Titanoxid, Titannitrid, Aluminiumoxid oder Chromoxid besteht.

26. Dehnmessstreifen nach einem der Ansprüche 17 bis 23, **dadurch gekennzeichnet, dass** eine Barriereschicht (20) aus Metall, insbesondere aus Aluminium, Silber, Gold, Kupfer, Chrom, Titan, Nickel, einer Metall-Legierung, oder einer intermetallischen Verbindung besteht.

27. Dehnmessstreifen nach einem der Ansprüche 17 bis 26, **dadurch gekennzeichnet, dass** eine Barriereschicht (20) mindestens zwei Teilschichten aufweist, wobei die Teilschichten aus gleichen oder verschiedenen Materialien, insbesondere anorganischen Materialien bestehen.

28. Dehnmessstreifen nach einem der Ansprüche 17 bis 27, **dadurch gekennzeichnet, dass** eine Polymerschicht (19) mindestens zwei Teilschichten aufweist, wobei die Teilschichten aus gleichen oder verschiedenen polymeren Materialien bestehen.

29. Dehnmessstreifen nach einem der Ansprüche 17 bis 28, **dadurch gekennzeichnet, dass** eine Barriereschicht (20) mittels physikalischer oder chemischer Beschichtungsmethoden, insbesondere mittels Aufdampfen im Vakuum, Aufdampfen an Luft, Plasmabeschichten, "sputtern", Sol-Gelverfahren, "chemical vapour deposition", "combustion chemical vapor deposition", plasma enhanced chemical vapor deposition", "plasma impulse chemical vapor deposition", oder, insbesondere für das Aufbringen von Metallen, elektrochemisches Abscheiden, erzeugt wird.

30. Dehnmessstreifen nach einem der Ansprüche 17 bis 29, **dadurch gekennzeichnet, dass** eine Polymerschicht (19) mittels Aufdampfen im Vakuum, Aufdampfen an Luft, insitu-Polymersisation von durch "flash evaporation" oder Plasmabeschichten aufgebrachten Monomeren oder Oligomeren, durch spin-coating, Elektrophorese, Kataphorese oder Anaphorese erzeugt wird.

31. Dehnmessstreifen nach einem der Ansprüche 17 bis 30, **dadurch gekennzeichnet, dass** die Widerstandsbahn (14) mäanderförmig ist.

32. Dehnmessstreifen nach Anspruch 31, **dadurch gekennzeichnet, dass** die Mehrlagenschicht (16) als Teilbeschichtung im Bereich der Widerstandsbahn (14), insbesondere in den Bereichen der Umkehrstellen (22) der mäanderförmigen Widerstandsbahn (14) vorhanden ist.

33. Dehnmessstreifen nach einem der Ansprüche 17 bis 32, **dadurch gekennzeichnet, dass** mehrere Dehnmessstreifen (13,13') in einer Reihen- oder Flächenanordnung vorhanden sind.

34. Verfahren zur Erzeugung einer Mehrlagenschicht (16) als Schutzschicht auf einer einen mit mindestens einem Dehnmessstreifen (13, 13') versehenen Verformungskörper (1) aufweisenden Kraftmesszelle, welcher Dehnmessstreifen (13) eine dehnungsempfindliche, auf einem Träger (15) aufgebrachte elektrische Widerstandsbahn (14) und Anschlusselektroden (17) zur Kontaktierung der Widerstandsbahn (14) aufweist, **dadurch gekennzeichnet, dass** eine ausebnende Polymerschicht (19') oder eine erste elektrisch isolierende Barriereschicht (20) auf mindestens einen Teil des Trägers (15) und/oder der Widerstandsbahn (14) und/oder der Anschlusselektroden (17) und gegebenenfalls den Verformungskörper (1) aufgebracht wird, gegebenenfalls auf der Polymerschicht (19') eine dünne Barriereschicht (20) abgeschieden wird, welcher Barriereschicht (20) eine weitere dünne Polymerschicht (19", 19"') folgt, und dass der Vorgang des Beschichtens mit einer abwechselnden Folge von einer dünnen Barriereschicht (20) und einer dünnen Polymerschicht (19") beliebig of wiederholt wird, wobei als Grenzschicht zur Umgebungsatmosphäre eine Polymerschicht (19"') oder eine dünne Barriereschicht (20) vorhanden sein kann, und wobei sich die Mehrlagenschicht (16) aus mindestens drei Einzelschichten zusammensetzt.

35. Verfahren zur Erzeugung einer Mehrlagenschicht (16) als Schutzschicht auf einem einzelnen Dehnmessstreifen (13, 13'), oder einer Reihen- oder Flächenanordnung von Dehnmessstreifen (13, 13'), welche Dehnmessstreifen (13,13') eine dehnungsempfindliche auf einem Träger (15) aufgebrachte elektrische Widerstandsbahn (14) und Anschlusselektoden (17) zur Kontaktierung der Widerstandsbahn (14) aufweisen, **dadurch gekennzeichnet, dass** eine ausebnende Polymerschicht (19') oder eine erste elektrisch isolierende Barriereschicht (20) auf mindestens einen Teil des Trägers (15) und/oder der Widerstandsbahn (14) und/oder der Anschlusselektroden (17) aufgebracht wird, gegebenenfalls auf der Polymerschicht (19') eine dünne Barriereschicht (20) abgeschieden wird, welcher Barriereschicht (20) eine weitere dünne Polymerschicht (19", 19"') folgt, und dass der Vorgang des Beschichtens mit einer abwechselnden Folge von einer dünnen Barriereschicht (20) und einer dünnen Polymerschicht (19") beliebig oft wiederholt wird, wobei als Grenzschicht zur Umgebungsatmosphäre eine Polymerschicht (19"') oder eine dünne Barriereschicht (20) vorhanden sein kann, und wobei sich die Mehrlagenschicht (16) aus mindestens drei Einzelschichten zusammensetzt.

36. Verfahren nach Anspruch 35, **dadurch gekennzeichnet, dass** die Mehrlagenschicht (16) auf den Träger (15) eines Dehmessstreifens (13) abgeschieden wird und anschliessend die Widerstandsbahn (14) und die Anschlusselektroden (17) auf der Mehrlagenschicht (16) aufgebracht werden.

37. Verfahren nach Anspruch 35, **dadurch gekennzeichnet, dass** die Mehrlagenschicht (16) auf den Träger (15) eines Dehmessstreifens abgeschieden wird und anschliessend die Widerstandsbahn (14) und die Anschlusselektroden (17) auf der gegenüberliegenden Seite des Trägers (15) aufgebracht werden.

38. Verfahren nach Anspruch 37, **dadurch gekennzeichnet, dass** der beschichtete Dehnmessstreifen mit dem Verformungskörper (1) einer Kraftmesszelle mittels eines elektrisch isolierenden Klebematerials (21) verbunden wird, wobei die Widerstandsbahn (14) sich auf der dem Verformungskörper (1) zugewandten Seite des beschichteten Dehnmessstreifens befindet.

39. Verfahren zur Erzeugung einer Mehrlagenschicht (16) als Schutzschicht auf einem einzelnen Dehnmessstreifen (13), oder einer Reihen- oder Flächenanordnung von Dehnmessstreifen (13), **dadurch gekennzeichnet, dass** die Mehrlagenschicht (16) in einer abwechselnden Folge von einer dünnen Barriereschicht (20) und einer dünnen Polymerschicht (19) auf eine Polymerfolie aufgebracht wird und anschliessend die Polymerfolie mitsamt der Mehrlagenschicht (16) auf einen einzelnen Dehnmessstreifen (13) oder eine Reihen- oder Flächenanordnung von Dehnmessstreifen (13) laminiert wird.

40. Verfahren zur Erzeugung einer Mehrlagenschicht (16) als Schutzschicht auf einer einen mit mindestens einem Dehnmessstreifen (13) versehenen Verformungskörper (1) aufweisenden Kraftmesszelle, **dadurch gekennzeichnet, dass** die Mehrlagenschicht (16) in einer abwechselnden Folge von einer dünnen Barriereschicht (20) und einer dünnen Polymerschicht (19) auf eine Polymerfolie aufgebracht wird und anschliessend die Polymerfolie mitsamt der Mehrlagenschicht (16) auf einen am Verformungskörper (1) einer Kraftmesszelle applizierten Dehnmessstreifen (13), diesen und gegebenenfalls einen Teil des Verformungskörpers (1) mindestens teilweise abdeckend, laminiert wird.

41. Verfahren nach einem der Ansprüche 34 bis 40, **dadurch gekennzeichnet, dass** die Herstellung der Barriereschichten (20) durch Aufdampfen im Vakuum, Aufdampfen an Luft, Plasmabeschichten, Sputtern, Sol-Gelverfahren, "chemical vapor deposition", "plasma impulse chemical vapor deposition", "combustion chemical vapor deposition", "plasma enhanced chemical vapor deposition" oder, insbesondere für das Aufbringen von Metallen, elektrochemisches Abscheiden erfolgt.

42. Verfahren nach Anspruch 41, **dadurch gekennzeichnet, dass** durch eine Veränderung der Beschichtungsparameter während der Erzeugung der Barriereschichten (20) diese in Form von mindestens zwei Teilschichten aufwachsen.

43. Verfahren nach einem der Ansprüche 34 bis 42, **dadurch gekennzeichnet, dass** die Herstellung der Polymerschichten (19) durch Aufdampfen im Vakuum, Aufdampfen an Luft, insitu-Polymersisation von durch "flash evaporation" oder Plasmabeschichten aufgebrachten Monomeren oder Oligomeren, durch "spin-coating", Elektrophorese, Kataphorese oder Anaphorese erfolgt.

44. Verfahren nach Anspruch 43, **dadurch gekennzeichnet, dass** durch eine Veränderung der Beschichtungsparameter während der Erzeugung der Polymerschichten (19) diese in Form von mindestens zwei Teilschichten aufwachsen.

45. Verfahren nach einem der Ansprüche 34 bis 44, **dadurch gekennzeichnet, dass** die Herstellung der Mehrlagenschicht (16) durch abwechselnde Beschichtung mit Polymerschichten (19) und Barriereschichten (20) innerhalb einer Beschichtungsapparatur mittels mindestens zweier Quellen in einem Arbeitsgang erfolgt.

46. Verfahren nach einem der Ansprüche 34 bis 45, **dadurch gekennzeichnet, dass** die Unterlage der Mehrlagenschicht (16) vor dem Beschichtungsvorgang einer Plasmareinigung oder einer chemischen Reinigung unterzogen wird.
